# EUROPEAN PATENT APPLICATION

(11) **EP 4 827 188 A1**
(43) Date of publication of application: **21.10.2026**
(21) Application number: 25751628.6
(22) Date of filing: 07.02.2025
(51) Int. Cl.: H04W 52/14

(54) **POWER CONTROL METHOD, DEVICE, AND STORAGE MEDIUM**

(30) Priority: 08.02.2024 CN 202410178078
(71) Applicant: Honor Device Co., Ltd., Shenzhen, Guangdong 518040 (CN)
(72) Inventor: ZHENG, Guozeng, Shenzhen, Guangdong 518040 (CN)
(74) Representative: Epping - Hermann - Fischer
(86) International application number: PCT/CN2025/076114
(87) International publication number: WO 2025/168029

(57) **Abstract**

Embodiments of this application provide a power control method, a device, and a storage medium, and relate to the field of communication technologies. A terminal device receives a power control offset parameter value that is sent by a primary network device and that indicates an uplink signal directed to a secondary network device, so that the terminal device determines, based on the power control offset parameter value, transmit power of the uplink signal directed to the secondary network device that does not support transmission of a downlink signal.

## Description

This application claims priority to Chinese Patent Application No. 202410178078.6, filed with the China National Intellectual Property Administration on February 8, 2024, and entitled "POWER CONTROL METHOD, DEVICE, AND STORAGE MEDIUM", which is incorporated herein by reference in its entirety.

### TECHNICAL FIELD

This application relates to the field of communications technologies, and in particular, to a power control method, a device, and a storage medium.

### BACKGROUND

In wireless communication, as a frequency used for signal transmission increases, signal coverage decreases. In particular, transmit power of a terminal device is limited, and limited coverage of an uplink signal becomes one of main problems. To enhance the coverage of the uplink signal, a solution is to deploy a large quantity of stations on a network side, but deployment costs of this solution are high. To reduce the deployment costs, some stations on the network side may support fewer functions. In some scenarios, a macro base station may support both transmission of a downlink signal and uplink reception. To enhance the coverage of the uplink signal, a micro base station that supports only uplink reception may be deployed, so that the deployment costs can be reduced.

In the foregoing deployment architecture, the micro base station cannot transmit a downlink signal, and a terminal device cannot receive a reference signal from the micro base station. As a result, a path loss between the terminal device and the micro base station cannot be determined.

Therefore, how to determine transmit power of the uplink signal is an urgent problem to be resolved currently.

### SUMMARY

Embodiments of this application provide a power control method, a device, and a storage medium, to determine transmit power of an uplink signal directed to a secondary network device that supports reception of an uplink signal.

According to a first aspect, an embodiment of this application provides a power control method, which is performed by a terminal device, and includes: receiving first information from a primary network device, where the first information indicates a power control offset parameter value of an uplink signal directed to a secondary network device, the primary network device supports receiving an uplink signal from the terminal device and transmitting a downlink signal to the terminal device, and the secondary network device supports receiving an uplink signal from the terminal device; and determining, based on the power control offset parameter value, transmit power of the uplink signal directed to the secondary network device. In other words, the transmit power of the uplink signal directed to the secondary network device is determined based on the power control offset parameter value, indicated by the primary network device, of the uplink signal directed to the secondary network device.

In an optional embodiment of the first aspect, the power control offset parameter value includes an offset value of a path loss of the uplink signal directed to the secondary network device and/or an offset value of a path loss compensation factor of the uplink signal directed to the secondary network device. In other words, the power control offset parameter value includes the offset value of the path loss of the uplink signal directed to the secondary network device; the power control offset parameter value includes the offset value of the path loss compensation factor of the uplink signal directed to the secondary network device; or the power control offset parameter value includes the offset value of the path loss of the uplink signal directed to the secondary network device and the offset value of the path loss compensation factor of the uplink signal directed to the secondary network device.

In an optional embodiment of the first aspect, determining, based on the power control offset parameter value, the transmit power of the uplink signal directed to the secondary network device includes: determining, based on an offset value of a path loss of the uplink signal directed to the secondary network device and a first path loss, a second path loss related to the transmit power of the uplink signal directed to the secondary network device, or determining, based on an offset value of a path loss compensation factor of the uplink signal directed to the secondary network device and a first path loss compensation factor, a second path loss compensation factor related to the transmit power of the uplink signal directed to the secondary network device; and determining, based on the second path loss and/or the second path loss compensation factor, the transmit power of the uplink signal directed to the secondary network device. The first path loss is a path loss for the primary network device, and the first path loss compensation factor is a path loss compensation factor configured by the primary network device.

In an optional embodiment of the first aspect, before determining, based on the power control offset parameter value, the transmit power of the uplink signal directed to the secondary network device, the method further includes: receiving second information from the primary network device, where the second information indicates to apply the power control offset parameter value. In other words, after receiving the information that is configured by the primary network device and that indicates the power control offset parameter value of the uplink signal directed to the secondary network device, the terminal device further applies the power control offset parameter value when receiving the information indicating to apply the power control offset parameter value, to determine the transmit power of the uplink signal directed to the secondary network device.

In an optional embodiment of the first aspect, the method further includes: receiving third information from the primary network device, where the third information is used to activate one or more of a plurality of power control offset parameter values configured by the primary network device for the terminal device. In other words, the plurality of power control offset parameter values configured by the primary network device for the terminal device need to be further activated for application.

In an optional embodiment of the first aspect, fourth information is received from the primary network device, where the fourth information indicates to deactivate one or more of the plurality of power control offset parameter values configured by the primary network device for the terminal device. In other words, when the transmit power of the uplink signal directed to the secondary network device does not need to be determined, the power control offset parameter value may be deactivated.

In an optional embodiment of the first aspect, fifth information is received from the primary network device, where the fifth information indicates a time range within which the power control offset parameter value is applied; and in response to the fifth information, the transmit power of the uplink signal directed to the secondary network device is determined within the time range based on the power control offset parameter value. In other words, only within the time range indicated by the primary network device, the power control offset parameter value may be applied, to determine the transmit power of the uplink signal directed to the secondary network device.

In an optional embodiment of the first aspect, sixth information is received from the primary network device, where the sixth information indicates a transmission status indicator. The transmission status indicator includes a first transmission status indicator and/or a second transmission status indicator. The first transmission status indicator is associated with the power control offset parameter value, and/or the second transmission status indicator is associated with the power control offset parameter value.

In an optional embodiment of the first aspect, the first transmission status indicator and the second transmission status indicator each correspond to one uplink signal, and determining, based on the power control offset parameter value, the transmit power of the uplink signal directed to the secondary network device includes: determining, based on the power control offset parameter value, the transmit power of the uplink signal directed to the secondary network device, where the uplink signal is an uplink signal corresponding to a transmission status indicator associated with the power control offset parameter value. In other words, the transmission status indicator is associated with the power control offset parameter value, so that the transmit power of the uplink signal directed to the secondary network device can be further determined based on the power control offset parameter value.

In an optional embodiment of the first aspect, the transmission status indicator is associated with a first preset index value, and determining, based on the power control offset parameter value, the transmit power of the uplink signal directed to the secondary network device includes: if a second preset index value associated with the power control offset parameter value is the same as the first preset index value, determining, based on the power control offset parameter value, the transmit power of the uplink signal directed to the secondary network device.

In an optional embodiment of the first aspect, the power control offset parameter value is associated with a preset closed-loop index, and determining, based on the power control offset parameter value, the transmit power of the uplink signal directed to the secondary network device includes: obtaining a power control command; and if the power control command is associated with the preset closed-loop index, determining, based on the power control offset parameter value, the transmit power of the uplink signal directed to the secondary network device. In other words, when the power control command and the power control offset parameter value are associated with a same closed-loop index, the transmit power of the uplink signal directed to the secondary network device may be determined based on the power control offset parameter value.

According to a second aspect, an embodiment of this application provides a power control method, which is performed by a primary network device, and includes: generating first information, where the first information indicates a power control offset parameter value of an uplink signal directed to a secondary network device, and the power control offset parameter value is used to determine transmit power of the uplink signal directed to the secondary network device; and sending the first information.

In an optional embodiment of the second aspect, the power control offset parameter value includes an offset value of a path loss of the uplink signal directed to the secondary network device and/or an offset value of a path loss compensation factor of the uplink signal directed to the secondary network device.

In an optional embodiment of the second aspect, the method further includes: sending second information, where the second information indicates to apply the power control offset parameter value.

In an optional embodiment of the second aspect, the method further includes: sending third information, where the third information is used to activate one or more of a plurality of power control offset parameter values configured by the primary network device for a terminal device.

In an optional embodiment of the second aspect, the method further includes: sending fourth information, where the fourth information indicates to deactivate one or more of the plurality of power control offset parameter values configured by the primary network device for the terminal device.

In an optional embodiment of the second aspect, the method further includes: sending fifth information, where the fifth information indicates a time range within which the power control offset parameter value is applied.

In an optional embodiment of the second aspect, the method further includes: sending sixth information, where the sixth information indicates a transmission status indicator. The transmission status indicator includes a first transmission status indicator and/or a second transmission status indicator. The first transmission status indicator is associated with the power control offset parameter value, and/or the second transmission status indicator is associated with the power control offset parameter value.

In an optional embodiment of the second aspect, the transmission status indicator is associated with a first preset index value, and the power control offset parameter value is associated with a second preset index value.

In an optional embodiment of the second aspect, the power control offset parameter value is associated with a preset closed-loop index, and the method further includes: sending a power control command, where the power control command is associated with the preset closed-loop index.

According to a third aspect, an embodiment of this application provides a terminal device, including: a transceiver unit, where the transceiver unit is configured to receive first information from a primary network device, the first information indicates a power control offset parameter value of an uplink signal directed to a secondary network device, the primary network device supports receiving an uplink signal from the terminal device and transmitting a downlink signal to the terminal device, and the secondary network device supports receiving an uplink signal from the terminal device; and a processing unit, where the processing unit is configured to determine, based on the power control offset parameter value, transmit power of the uplink signal directed to the secondary network device.

In an optional embodiment of the third aspect, the power control offset parameter value includes an offset value of a path loss of the uplink signal directed to the secondary network device and/or an offset value of a path loss compensation factor of the uplink signal directed to the secondary network device.

In an optional embodiment of the third aspect, the processing unit is specifically configured to: determine, based on an offset value of a path loss of the uplink signal directed to the secondary network device and a first path loss, a second path loss related to the transmit power of the uplink signal directed to the secondary network device, or determine, based on an offset value of a path loss compensation factor of the uplink signal directed to the secondary network device and a first path loss compensation factor, a second path loss compensation factor related to the transmit power of the uplink signal directed to the secondary network device; and determine, based on the second path loss and/or the second path loss compensation factor, the transmit power of the uplink signal directed to the secondary network device. The first path loss is a path loss for the primary network device, and the first path loss compensation factor is a path loss compensation factor configured by the primary network device.

In an optional embodiment of the third aspect, the transceiver unit is further configured to receive second information from the primary network device, where the second information indicates to apply the power control offset parameter value.

In an optional embodiment of the third aspect, the transceiver unit is further configured to receive third information from the primary network device, where the third information is used to activate one or more of a plurality of power control offset parameter values configured by the primary network device for the terminal device.

In an optional embodiment of the third aspect, the transceiver unit is further configured to receive fourth information from the primary network device, where the fourth information indicates to deactivate one or more of the plurality of power control offset parameter values configured by the primary network device for the terminal device.

In an optional embodiment of the third aspect, the transceiver unit is further configured to receive fifth information from the primary network device, where the fifth information indicates a time range within which the power control offset parameter value is applied. The processing unit is further configured to: in response to the fifth information, determine, within the time range and based on the power control offset parameter value, the transmit power of the uplink signal directed to the secondary network device.

In an optional embodiment of the third aspect, the transceiver unit is further configured to receive sixth information from the primary network device, where the sixth information indicates a transmission status indicator. The transmission status indicator includes a first transmission status indicator and/or a second transmission status indicator. The first transmission status indicator is associated with the power control offset parameter value, and/or the second transmission status indicator is associated with the power control offset parameter value.

In an optional embodiment of the third aspect, the first transmission status indicator and the second transmission status indicator each correspond to one uplink signal, and the processing unit is further configured to determine, based on the power control offset parameter value, the transmit power of the uplink signal directed to the secondary network device, where the uplink signal is an uplink signal corresponding to a transmission status indicator associated with the power control offset parameter value.

In an optional embodiment of the third aspect, the transmission status indicator is associated with a first preset index value, and the processing unit is further configured to: if a second preset index value associated with the power control offset parameter value is the same as the first preset index value, determine, based on the power control offset parameter value, the transmit power of the uplink signal directed to the secondary network device.

In an optional embodiment of the third aspect, the power control offset parameter value is associated with a preset closed-loop index, and the transceiver unit is further configured to receive a power control command; and the processing unit is further configured to: if the power control command is associated with the preset closed-loop index, determine, based on the power control offset parameter value, the transmit power of the uplink signal directed to the secondary network device.

According to a fourth aspect, an embodiment of this application provides a network device, including a transceiver unit. The transceiver unit is configured to: generate first information, where the first information indicates a power control offset parameter value of an uplink signal directed to a secondary network device, and the power control offset parameter value is used to determine transmit power of the uplink signal directed to the secondary network device; and send the first information.

In an optional embodiment of the fourth aspect, the power control offset parameter value includes an offset value of a path loss of the uplink signal directed to the secondary network device and/or an offset value of a path loss compensation factor of the uplink signal directed to the secondary network device.

In an optional embodiment of the fourth aspect, the method further includes: sending second information, where the second information indicates to apply the power control offset parameter value.

In an optional embodiment of the fourth aspect, the transceiver unit is further configured to send third information, where the third information is used to activate one or more of a plurality of power control offset parameter values configured by the primary network device for a terminal device.

In an optional embodiment of the fourth aspect, the transceiver unit is further configured to send fourth information, where the fourth information indicates to deactivate one or more of the plurality of power control offset parameter values configured by the primary network device for the terminal device.

In an optional embodiment of the fourth aspect, the transceiver unit is further configured to send fifth information, where the fifth information indicates a time range within which the power control offset parameter value is applied.

In an optional embodiment of the fourth aspect, the transceiver unit is further configured to send sixth information, where the sixth information indicates a transmission status indicator. The transmission status indicator includes a first transmission status indicator and/or a second transmission status indicator. The first transmission status indicator is associated with the power control offset parameter value, and/or the second transmission status indicator is associated with the power control offset parameter value.

In an optional embodiment of the fourth aspect, the transmission status indicator is associated with a first preset index value, and the power control offset parameter value is associated with a second preset index value.

In an optional embodiment of the fourth aspect, the power control offset parameter value is associated with a preset closed-loop index, and the transceiver unit is further configured to send a power control command, where the power control command is associated with the preset closed-loop index.

According to a fifth aspect, an embodiment of this application provides an electronic device, including a processor and a memory. The memory stores computer-executable instructions, and the processor executes the computer-executable instructions stored in the memory, so that the electronic device performs the power control method according to the first aspect or the electronic device performs the power control method according to the second aspect.

According to a sixth aspect, an embodiment of this application provides a computer-readable storage medium. The computer-readable storage medium stores a computer program, and when the computer program is executed by a processor, the power control method according to the first aspect is implemented, or an electronic device is enabled to perform the power control method according to the second aspect.

According to a seventh aspect, this application provides a chip system, including at least one processor and a communication interface. The communication interface is interconnected to the at least one processor through a line, and the at least one processor is configured to run a computer program or instructions, to perform the power control method according to the first aspect, or so that an electronic device is enabled to perform the power control method according to the second aspect.

According to an eighth aspect, an embodiment of this application provides a computer program product, including a computer program. When the computer program is run, a computer is enabled to perform the power control method according to the first aspect, or an electronic device is enabled to perform the power control method according to the second aspect.

Embodiments of this application provide a power control method, a device, and a storage medium. A power control offset parameter value that is sent by a primary network device and that indicates an uplink signal directed to a secondary network device is received, so that transmit power of the uplink signal directed to the secondary network device that does not support transmission of a downlink signal is determined based on the power control offset parameter value.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3 is a schematic flowchart of a power control method according to an embodiment of this application;
FIG. 4 is a schematic flowchart of a power control method according to another embodiment of this application;
FIG. 5 is a schematic flowchart of a power control method according to another embodiment of this application;
FIG. 6 is a schematic flowchart of a power control method according to another embodiment of this application;
FIG. 7 is a schematic flowchart of a power control method according to another embodiment of this application;
FIG. 8 is a schematic flowchart of a power control method according to another embodiment of this application;
FIG. 9 is a schematic flowchart of a power control method according to another embodiment of this application;
FIG. 10 is a schematic flowchart of a power control method according to another embodiment of this application;
FIG. 11 is a diagram of a structure of a terminal device according to an embodiment of this application;
FIG. 12 is a diagram of a structure of a network device according to an embodiment of this application; and
FIG. 13 is a diagram of a structure of an electronic device according to an embodiment of this application.

### DESCRIPTION OF EMBODIMENTS

The following describes technical solutions of this application with reference to accompanying drawings.

For ease of understanding, the following descriptions are first provided.

First, in embodiments of this application, terms such as "first" and "second" are used to distinguish between same or similar items with basically same functions and roles. For example, a first chip and a second chip are merely used to distinguish between different chips, and are not intended to limit a sequence thereof. A person skilled in the art may understand that the terms such as "first" and "second" do not limit a quantity or an execution order, and the terms such as "first" and "second" do not define a definite difference.

Secondly, it should be noted that, in embodiments of this application, the term "example" or "for example" represent giving an example, an illustration, or a description. Any embodiment or design scheme described as "example" or "for example" in this application should not be construed as being more preferred or having more advantages than another embodiment or design scheme. To be precise, use of terms such as "example" or "for example" is intended to present a related concept in a specific manner.

Thirdly, in embodiments of this application, "at least one" means one or more, and "a plurality of" means two or more. The term "and/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including a singular item (piece) or any combination of a plurality of items (pieces). For example, at least one of a, b, or c may indicate: a, b, c, a and b, a and c, b and c, or a, b, and c, where a, b, and c may be singular or plural.

To better understand the power control method provided in embodiments of this application, the following first describes an architecture of a communication system in embodiments of this application.

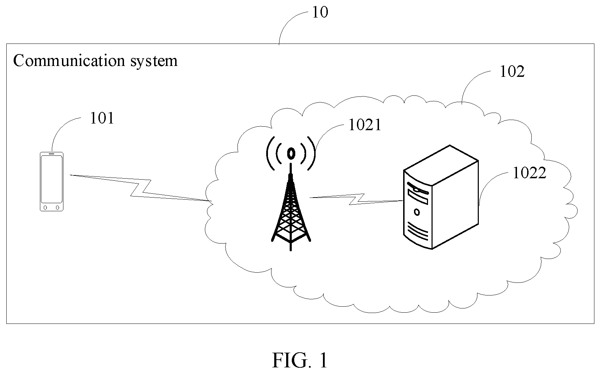

For example, FIG. 1 is a diagram of an architecture of a communication system according to an embodiment of this application. As shown in FIG. 1, the communication system 10 includes a terminal device 101 and a network device 102, and the terminal device 101 communicates with the network device 102 in a wireless manner.

The terminal device in embodiments of this application may also be referred to as a terminal, and may be a device with a wireless transceiver function. The terminal device may be deployed on land, including an indoor or outdoor terminal, a handheld terminal, or a vehicle-mounted terminal, may be deployed on water (for example, a ship), or may be deployed in air (for example, an airplane, a balloon, and a satellite). The terminal device may be user equipment (user equipment, UE). The UE includes a handheld device, a vehicle-mounted device, a wearable device, or a compute device that has a wireless communication function. For example, the UE may be a mobile phone (mobile phone), a tablet computer, or a computer with a wireless transceiver function. The terminal device may alternatively be a virtual reality (virtual reality, VR) terminal device, an augmented reality (augmented reality, AR) terminal device, a mixed reality (mixed reality, MR) terminal device, a wireless terminal in industrial control, a wireless terminal in self driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of the terminal device may be a terminal device, or may be an apparatus that can support the terminal device in implementing the function, for example, a chip system. The apparatus may be mounted in the terminal device.

The network device 102 in embodiments of this application includes an access network device 1021 and a core network device 1022. Optionally, the access network device 1021 may be a next generation NodeB (next generation NodeB, gNodeB), which may also be referred to as a 5G base station.

The access network (radio access network, RAN) device is an intermediate device for the terminal device to access the core network device in a wireless manner, and is mainly responsible for radio resource management on an air interface side, quality of service (quality of service, QoS) management, data compression and encryption, and the like, and is, for example, a NodeB (NodeB), an evolved NodeB eNodeB, a NodeB (gNodeB) in a 5G mobile communication system or a new radio (new radio, NR) communication system, or a NodeB in a future mobile communication system.

The core network (core network, CN) device includes a user plane function (user plane function, UPF) network element, an access and mobility management function (access and mobility management function, AMF) network element, a session management function (session management function, SMF) network element, and a policy control function (policy control function, PCF) network element. The UPF network element is mainly responsible for transmission of user data, and another network element may be referred to as a control plane function network element, and is mainly responsible for authentication, authorization, registration management, session management, mobility management, policy control, and the like, to ensure reliable and stable transmission of the user data.

In embodiments of this application, an apparatus configured to implement a function of the network device may be a network device, or may be an apparatus that can support the network device in implementing the function, for example, a chip system. The apparatus may be mounted in the network device.

The technical solutions provided in embodiments of this application may be applied to a long term evolution (long term evolution, LTE) architecture, or may be applied to a universal mobile telecommunications system (universal mobile telecommunications system, UMTS) terrestrial radio access network (UMTS terrestrial radio access network, UTRAN) architecture or a global system for mobile telecommunications (global system for mobile communications, GSM)/enhanced data rate for GSM evolution (enhanced data rate for GSM evolution, EDGE) radio access network (GSM EDGE radio access network, GERAN) architecture. In addition, the technical solutions provided in embodiments of this application may be further applied to any other wireless communication system with a similar structure and function, for example, a public land mobile network (a public land mobile network, PLMN) system, a 5G communication system, or a communication system after 5G. This is not limited in embodiments of this application.

Wireless communication between communication devices may include wireless communication between a network device and a terminal device, wireless communication between network devices, and wireless communication between terminal devices. In embodiments of this application, the term "wireless communication" may also be referred to as "communication", and the term "communication" may also be described as "data transmission", "information transmission", or "transmission". A person skilled in the art may use the technical solutions provided in embodiments of this application to perform wireless communication between the network device and the terminal device, for example, wireless communication between the access network device and the terminal device.

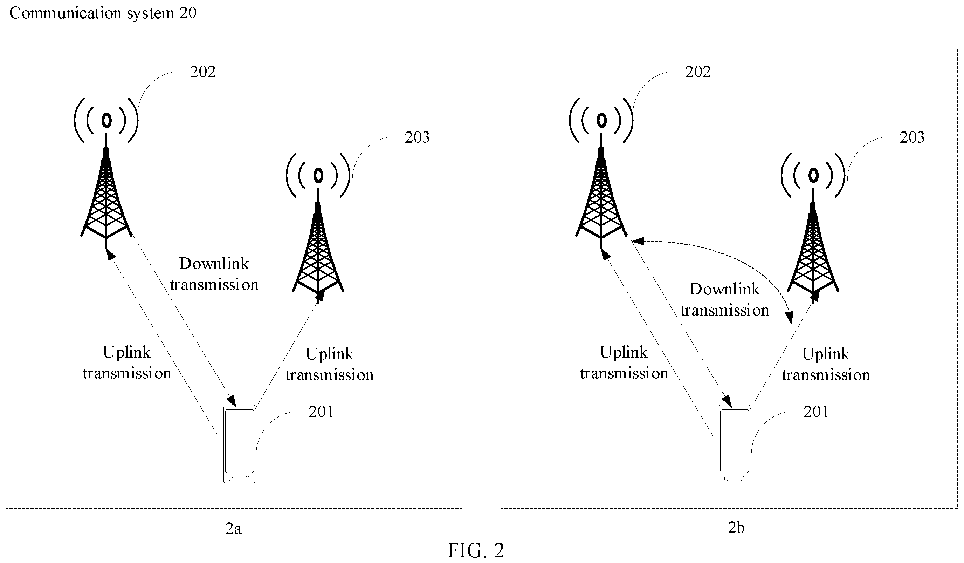

FIG. 2 is a diagram of an architecture of another communication system according to an embodiment of this application. As shown in FIG. 2, the communication system 20 includes a terminal device 201, a primary (primary) network device 202, and a secondary (secondary) network device 203. The terminal device 201 may perform wireless communication with the primary network device 202 and the secondary network device 203.

The terminal device 201 is similar to the terminal device 101 in FIG. 1, and the primary network device 202 and the secondary network device 203 are similar to the network device 102 in FIG. 1. Details are not described herein again.

Specifically, a serving network device corresponding to the terminal device 201 may include the primary network device 202 and/or the secondary network device 203.

The primary network device 202 may support both transmission of a downlink signal and reception of an uplink signal, and the secondary network device 203 may support reception of an uplink signal.

For example, the primary network device 202 may also be described as a macro base station, and the secondary network device 203 may also be described as a micro base station.

It should be noted that one secondary network device is shown in FIG. 2. A quantity of secondary network devices is not limited in the power control method provided in embodiments of this application, and a specific quantity of secondary network devices is determined according to an actual requirement.

In some scenarios, in an architecture of the communication system shown in FIG. 2a, an uplink signal transmitted by the terminal device may be an uplink signal directed to the secondary network device.

In some other scenarios, in an architecture of the communication system shown in FIG. 2b, because the terminal device has mobility, an uplink signal transmitted by the terminal device may be changed from being directed to the primary network device to being directed to the secondary network device, or may be changed from being directed to the secondary network device to being directed to the primary network device. For example, in some cases, when a distance between the terminal device and the primary network device is less than a distance between the terminal device and the secondary network device, the terminal device may transmit the uplink signal to the primary network device.

In some other scenarios, to enhance an uplink signal rate, in the diagram of the architecture of the communication system shown in FIG. 2a, the terminal device may simultaneously transmit uplink signals to the primary network device and the secondary network device. In this case, the primary network device needs to indicate, to the terminal device, two sets of power configuration parameters for uplink signal transmission, where one set of power configuration parameters is used for the terminal device to send the uplink signal to the primary network device, and the other set of power configuration parameters is used for the terminal device to send the uplink signal to the secondary network device.

In a related technology, in the communication system shown in FIG. 2, the terminal device 201 may receive a downlink signal, for example, a downlink reference signal, from the primary network device 202. Further, the terminal device 201 may determine downlink reference signal transmit power based on received downlink reference signal transmit power information transmitted by the primary network device 202, and determine a path loss between the terminal device 201 and the primary network device 202 based on reference signal received power detected by the terminal device 201.

Based on a case in which the secondary network device 203 does not support transmission of a downlink signal, that is, the terminal device cannot receive a downlink reference signal transmitted by the secondary network device 203 and further cannot receive downlink reference signal transmit power information transmitted by the secondary network device 203, the terminal device 201 cannot determine a path loss between the terminal device 201 and the secondary network device 203. In addition, because geographical locations of the primary network device 202 and the secondary network device 203 are different, the path loss between the primary network device 202 and the terminal device 201 may be different from the path loss between the secondary network device 203 and the terminal device 201. Therefore, the path loss between the primary network device 202 and the terminal device 201 cannot be directly used to determine transmit power of the uplink signal that is of the terminal device 201 and that is directed to the secondary network device.

Based on the foregoing problem, an embodiment of this application provides a power control method. A main inventive idea of the power control method is as follows.

A primary network device sends a power control offset parameter value for a secondary network device to a terminal device, so that the terminal device determines, based on the power control offset parameter value, a path loss and/or a path loss compensation factor of an uplink signal that is of the terminal device and that is directed to the secondary network device, and further determines, based on the path loss and/or the path loss compensation factor, transmit power of the uplink signal that is of the terminal device and that is directed to the secondary network device.

The following first describes in detail a manner of determining the transmit power of the uplink signal of the terminal device.

Specifically, the transmit power of the uplink signal of the terminal device may be expressed by using the following formula: ${P}_{l} = min \left\{\begin{matrix}{P}_{CMAX} \\ {P}_{0} + 10 ⋅ {log}_{10} \left(M\right) + α ⋅ PL + {f}_{l}\end{matrix}\right\} dBm$

*Pₗ* represents a transmit power value of the uplink signal, namely, the transmit power of the uplink signal of the terminal device. *l* represents a closed-loop index, where a network device may configure a plurality of closed-loop indexes, for example, *l* = 0 and *l* = 1. *P_{CMAX}* represents a maximum allowed transmit power value of the uplink signal. *P*₀ represents target received power on a network device side, and is generally configured by the network device. *M* represents a bandwidth of the uplink signal. *PL* represents the path loss, where the path loss is calculated based on a downlink reference signal, and a specific calculation formula is: downlink reference signal transmit power-downlink reference signal received power. *α* represents the path loss compensation factor, is used to compensate for the path loss, and is usually configured by the network device, where 0 ≤ *α* ≤ 1. *fₗ* represents a closed-loop power adjustment amount.

Specifically, closed-loop power adjustment is classified into the following types:
(1) absolute closed-loop power adjustment: *fₗ* is a power adjustment amount indicated by a power control command sent by the network device to the terminal device; and
(2) accumulated closed-loop power adjustment: a plurality of power control commands previously sent by the network device to the terminal device need to be considered for *fₗ*, where *fₗ* is an accumulated sum of power adjustment amounts indicated by the plurality of power control commands.

The power control command is for the closed-loop index *l*, and is usually indicated in DCI.

It may be understood that a path loss of transmit power of an uplink signal between the primary network device and the terminal device is determined based on the downlink reference signal. Specifically, a difference between the downlink reference signal transmit power and the downlink reference signal received power is used as the path loss PL between the terminal device and the primary network device. Further, a product α · PL of a path loss compensation factor α configured by the primary network device and the path loss between the terminal device and the primary network device is used as a component in determining the transmit power of the uplink signal between the terminal device and the primary network device. However, because the secondary network device does not support transmission of a downlink signal, in the foregoing method for determining the transmit power of the uplink signal, the path loss and the path loss compensation factor of the uplink signal between the terminal device and the secondary network device cannot be determined. In this case, in embodiments of this application, for the foregoing communication system deployment architecture, a power control method is proposed, where the transmit power of the uplink signal between the terminal device and the secondary network device is further determined by determining the path loss and the path loss compensation factor of the uplink signal directed to the secondary network device.

It should be noted that, in the power control method provided in embodiments of this application, the path loss PL between the terminal device and the primary network device is referred to as a first path loss, and the path loss compensation factor α configured by the primary network device for the primary network device is referred to as a first path loss compensation factor α.

Optionally, in the power control method provided in embodiments of this application, the uplink signal of the terminal device includes a signal corresponding to an uplink channel and/or an uplink reference signal.

In some embodiments, the uplink signal of the terminal device includes the signal corresponding to the uplink channel.

In some embodiments, the uplink signal of the terminal device includes the uplink reference signal.

In some embodiments, the uplink signal of the terminal device includes the signal corresponding to the uplink channel and the uplink reference signal.

Optionally, the uplink channel includes a physical uplink shared channel (physical uplink shared channel, PUSCH), a physical uplink control channel (physical uplink control channel, PUCCH), and/or a physical random access channel (physical random access channel, PRACH).

Optionally, the uplink reference signal includes at least one of an uplink reference signal used for a non-codebook, an uplink reference signal used for a codebook, or an uplink reference signal used for beam management.

Specifically, the uplink reference signal used for a non-codebook is mainly used to determine a codebook of an uplink signal based on uplink-downlink reciprocity of a channel, and the uplink reference signal used for a codebook is mainly used to assist the network device in determining a codebook of an uplink signal.

It may be understood that, in the power control method provided in embodiments of this application, the secondary network device does not support the transmission of the downlink signal, that is, the terminal device cannot receive the transmission of the downlink signal of the secondary network device, and the uplink-downlink reciprocity of the channel cannot be met.

Therefore, the power control method provided in embodiments of this application can be used for the uplink reference signal for a non-codebook.

Optionally, the uplink reference signal does not include an uplink reference signal used for antenna switching.

Specifically, the uplink reference signal used for antenna switching is mainly used to assist the network device in measuring a downlink channel.

It may be understood that, in the power control method provided in embodiments of this application, the secondary network device does not support the transmission of the downlink signal, that is, the terminal device cannot receive the transmission of the downlink signal of the secondary network device, and the uplink reference signal used for antenna switching is transmitted by the terminal device to the primary network device. Therefore, the power control method provided in embodiments of this application cannot be used for the uplink reference signal for antenna switching.

Based on the foregoing representation formula for the transmit power of the uplink signal of the terminal device, the following separately describes in detail power control formulas for the physical uplink shared channel (physical uplink shared channel, PUSCH), the physical uplink control channel (physical uplink control channel, PUCCH), the physical random access channel (physical random access channel, PRACH), and a channel sounding reference signal (sounding reference signal, SRS).
(1) The power control formula for the PUSCH may be represented by using the following formula: ${P}_{PUSCH , b , f , c} \left(i, j, {q}_{d}, l\right) = min \left\{\begin{matrix}{P}_{CMAX , f , c} \left(i\right) , \\ {P}_{O_PUSCH , b , f , c} \left(j\right) + 10 {log}_{10} \left({2}^{μ}⋅{M}_{RB , b , f , c}^{PUSCH}\left(i\right)\right) + {α}_{b , f , c} \left(j\right) ⋅ {PL}_{b , f , c} \left({q}_{d}\right) + {Δ}_{TF , b , f , c} \left(i\right) + {f}_{b , f , c} \left(i, l\right)\end{matrix}\right\}$ b represents a bandwidth part (bandwidth part, BWP), c represents a cell, f represents a carrier, i represents a subframe, j represents an index of a configuration parameter, and PL represents a path loss.

Optionally, P_{O_PUSCH,b,f,c}(j) = P_{O_NOMINAL,PUSCH,f,c}(j) + P_{O_UE_PUSCH,b,f,c}(j).

For a specific parameter in the foregoing formulas, refer to a meaning defined in an existing communication standard. For example, for specific content of P_{O_PUSCH,b,f,c}(j) and α_{b,f,c}(j), reference may be made to definitions in the protocol TS 38.213 in the 3^{rd} generation partnership project (3rd Generation Partnership Project, 3GPP). Details are not described herein. For specific content of p0-Nominal, p0, P0-PUSCH-Alpha, deltaPreamble, and msg3-DeltaPreamble, refer to definitions in the protocol 3GPP TS 38.331. Details are not described herein.

In addition, *α_{b,f,c}*(*j*) is the path loss compensation factor described in this application, and *PL_{b,f,c}* is the path loss described in this application.

It may be understood that the foregoing power control formula is used to calculate transmit power of an uplink signal for the terminal device to transmit PUSCH information in the BWP (b), the cell c, the carrier f, and the subframe i. In other words, the terminal device may calculate, based on the parameter of the PUSCH, the transmit power of the uplink signal for the terminal device to transmit the PUSCH information in the BWP (b), the cell c, the carrier f, and the subframe i.

(2) The power control formula for the PUCCH may be represented by using the following formula: ${P}_{PUCCH , b , f , c} \left(i, {q}_{u}, {q}_{d}, l\right) = min \left\{\begin{matrix}{P}_{CMAX , f , c} \left(i\right) , \\ {P}_{O_PUCCH , b , f , c} \left({q}_{u}\right) + 10 {log}_{10} \left({2}^{μ}⋅{M}_{RB , b , f , c}^{PUCCH}\left(i\right)\right) + {PL}_{b , f , c} \left({q}_{d}\right) + {Δ}_{F_PUCCH} \left(F\right) + {Δ}_{TF , b , f , c} \left(i\right) + {g}_{b , f , c} \left(i, l\right)\end{matrix}\right\}$ b represents a BWP, c represents a cell, f represents a carrier, i represents a subframe, qᵤ represents an index of a configuration parameter, and PL represents a path loss.

For a specific parameter in the foregoing formula, refer to a meaning defined in an existing communication standard. For example, for specific content of P_{O_PUCCH,b,f,c}(qᵤ), refer to a definition in the protocol 3GPP TS 38.213. Details are not described herein. For specific content of p0-PUCCH, refer to a definition in the protocol 3GPP TS 38.331. Details are not described herein.

In addition, it may be understood that, for the PUCCH, a value of α is 1. Therefore, this is not shown in the formula. *PL_{b,f,c}* is the path loss described in this application.

It may be understood that the foregoing power control formula is used to calculate transmit power of an uplink signal for the terminal device to transmit PUCCH information in the BWP (b), the cell c, the carrier f, and the subframe i. In other words, the terminal device may calculate, based on the parameter of the PUCCH, uplink transmit power for the terminal device to transmit the PUCCH information in the BWP b, the cell c, the carrier f, and the subframe i.

(3) The power control formula for the PRACH may be represented by using the following formula: ${P}_{PRACH , b , f , c} \left(i\right) = min \left\{{P}_{CMAX , f , c}\left(i\right),{P}_{PRACH , target , f , c}+{PL}_{b , f , c}\right\}$ b represents a BWP, c represents a cell, f represents a carrier, i represents a subframe, and PL represents a path loss.

For a specific parameter in the foregoing formula, refer to a meaning defined in an existing communication standard. For example, for P_{PRACH,target,f,c}, refer to a definition in the protocol 3GPP TS 38.213. Details are not described herein. For specific content of PREAMBLE_RECEIVED_TARGET_POWER, refer to a definition in the protocol 3GPP TS 38.321. Details are not described herein. For specific content of preambleReceivedTargetPower and powerRampingStep, refer to definitions in the protocol 3GPP TS 38.331. Details are not described herein.

In addition, it may be understood that, for the PRACH, a value of *α* is 1. Therefore, this is not shown in the formula. *PL_{b,f,c}* is the path loss described in this application.

It may be understood that the foregoing power control formula is used to calculate transmit power of an uplink signal for the terminal device to transmit PRACH information in the BWP (b), the cell c, the carrier f, and the subframe i. In other words, the terminal device may calculate, based on the parameter of the PRACH, uplink transmit power for the terminal device to transmit the PRACH information in the BWP b, the cell c, the carrier f, and the subframe i.

(4) The power control formula for the SRS may be represented by using the following formula: ${P}_{SRS , b , f , c} \left(i, {q}_{s}, l\right) = min \left\{\begin{matrix}{P}_{CMAX , f , c} \left(i\right) , \\ {P}_{O_SRS , b , f , c} \left({q}_{s}\right) + 10 {log}_{10} \left({2}^{μ}⋅{M}_{SRS , b , f , c}\left(i\right)\right) + {α}_{SRS , b , f , c} \left({q}_{s}\right) ⋅ {PL}_{b , f , c} \left({q}_{d}\right) + {h}_{b , f , c} \left(i, l\right)\end{matrix}\right\}$ b represents a BWP, c represents a cell, f represents a carrier, i represents a subframe, qₛ represents an index of a configuration parameter, and PL represents a path loss.

For a specific parameter in the foregoing formula, refer to a meaning defined in an existing communication standard. For example, for P_{O_SRS,b,f,c}(qₛ) and α_{SRS,b,f,c}(qₛ), refer to definitions in the protocol 3GPP TS 38.213. Details are not described herein.

In addition, *α*_{SRS,*b*,*f*,*c*} is the path loss compensation factor described in this application, and *PL_{b,f,c}* is the path loss described in this application.

It may be understood that the foregoing power control formula is used to calculate transmit power of an uplink signal for the terminal device to transmit SRS information in the BWP (b), the cell c, the carrier f, and the subframe i. In other words, the terminal device may calculate, based on the parameter of the SRS, uplink transmit power for the terminal device to transmit the SRS information in the BWP b, the cell c, the carrier f, and the subframe i.

The following describes in detail the technical solutions in this application with reference to specific embodiments. It should be noted that the following embodiments may exist independently, or may be combined with each other. Same or similar content, for example, explanations and descriptions of terms or nouns and explanations and descriptions of steps, may be mutually referenced in different embodiments, and is not repeatedly described.

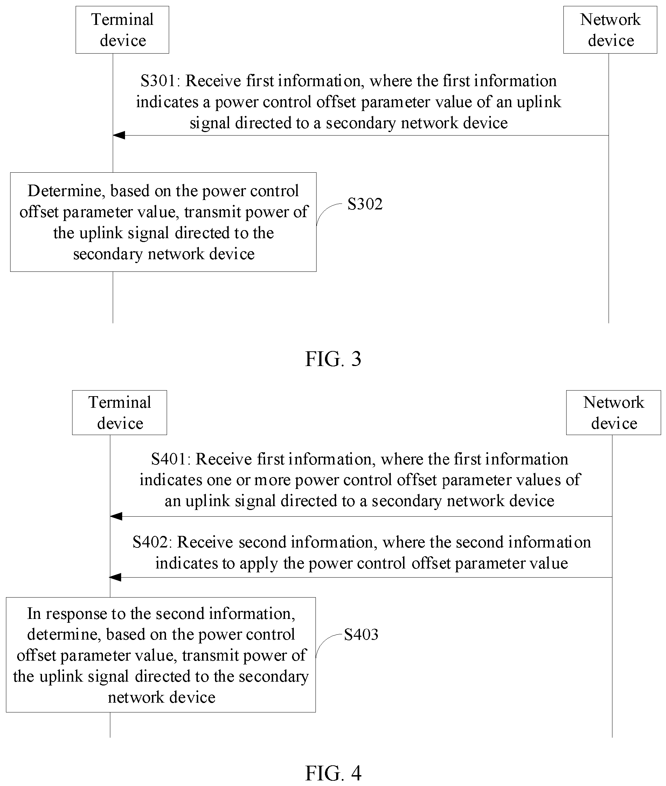

FIG. 3 is a schematic flowchart of a power control method according to an embodiment of this application. As shown in FIG. 3, the power control method includes the following steps.

S301: Receive first information from a primary network device, where the first information indicates a power control offset parameter value of an uplink signal directed to a secondary network device.

Correspondingly, the primary network device sends the first information.

For example, sending the first information may also be described as indicating the first information, or may be described as transmitting the first information.

For example, receiving the first information may also be described as obtaining the first information.

Optionally, that the primary network device sends the first information further includes generating the first information. Specifically, the network device generates the first information based on a behavior that is of a terminal device and that is detected by the network device.

For example, generating the first information may also be described as determining the first information.

Optionally, the primary network device supports both transmission of a downlink signal and reception of an uplink signal, and the secondary network device supports reception of an uplink signal.

Specifically, the primary network device supports receiving the uplink signal from the terminal device and sending the downlink signal to the terminal device, and the secondary network device supports receiving the uplink signal from the terminal device, but does not support sending a downlink signal to the terminal device.

Optionally, the uplink signal of the terminal device may include a signal corresponding to an uplink channel and/or an uplink reference signal.

Optionally, the uplink channel includes at least one of the following: a PUSCH, a PUCCH, and a PRACH.

Optionally, the uplink reference signal includes at least one of the following: an uplink reference signal used for a non-codebook, an uplink reference signal used for a codebook, or an uplink reference signal used for beam management.

Optionally, the power control offset parameter value includes an offset value of a path loss of the uplink signal and/or an offset value of a path loss compensation factor of the uplink signal.

In some embodiments, the power control offset parameter value includes the offset value of the path loss of the uplink signal. In some embodiments, the power control offset parameter value includes the offset value of the path loss compensation factor of the uplink signal. In some embodiments, the power control offset parameter value includes the offset value of the path loss of the uplink signal and the offset value of the path loss compensation factor of the uplink signal. Optionally, the first information is carried in radio resource control (radio resource control, RRC) signaling.

S302: Determine, based on the power control offset parameter value, transmit power of the uplink signal directed to the secondary network device.

For example, the transmit power of the uplink signal directed to the secondary network device may also be described as transmit power for uplink transmission of the secondary network device.

Optionally, if the channel of the uplink signal is associated with the power control offset parameter value, the transmit power of the uplink signal directed to the secondary network device by the channel is determined based on the power control offset parameter value; and/or
if the uplink reference signal is associated with the power control offset parameter value, transmit power of the uplink signal directed to the secondary network device by the uplink reference signal is determined based on the power control offset parameter value.

Optionally, when the power control offset parameter value includes the offset value of the path loss of the uplink signal directed to the secondary network device, a second path loss related to the transmit power of the uplink signal directed to the secondary network device is determined based on the offset value of the path loss and a first path loss PL.

In some embodiments, the second path loss may be represented by using the following formula: Second path loss=First path loss PL+Offset value ΔPL of a path loss.

PL represents the first path loss, and ΔPL represents the offset value of the path loss.

First path loss PL=Downlink reference signal transmit power-Downlink reference signal received power.

The downlink reference signal transmit power is transmit power of a downlink reference signal of the primary network device, and reference signal received power is received power of a reference signal obtained through higher-layer filtering by the terminal device.

The first path loss PL and the second path loss are in a unit of dB.

It may be understood that, to enhance uplink coverage, a distance between the secondary network device and the terminal device is usually shorter than a distance between the primary network device and the terminal device. Therefore, an actual path loss between the secondary network device and the terminal device may be smaller than a path loss between the primary network device and the terminal device. In other words, the offset value of the path loss is less than or equal to 0.

Optionally, the offset value of the path loss is less than or equal to 0.

It should be noted that, based on the foregoing formula, when the offset value of the path loss is less than or equal to 0, the offset value of the path loss is preceded by "+".

In some embodiments, the second path loss may alternatively be represented by using the following formula:
Second path loss=First path loss PL-Offset value ΔPL of a path loss.

Optionally, the offset value of the path loss is greater than or equal to 0.

It should be noted that, based on the foregoing formula, when the offset value of the path loss is greater than or equal to 0, the offset value of the path loss is preceded by "-".

Optionally, when the power control offset parameter value includes the offset value of the path loss compensation factor of the uplink signal directed to the secondary network device, a second path loss compensation factor related to the transmit power of the uplink signal directed to the secondary network device is determined based on the offset value of the path loss compensation factor and a first path loss compensation factor α.

In some embodiments, the second path loss compensation factor may be represented by using the following formula:
Second path loss compensation factor=First path loss compensation factor α+Offset value Δα of a path loss compensation factor.

α represents the first path loss compensation factor, and Δα represents the offset value of the path loss compensation factor.

The first path loss compensation factor α may be a path loss compensation factor configured by the primary network device for the terminal device, and the first path loss compensation factor α is less than or equal to 0.

It may be understood that, to enhance uplink coverage, the distance between the secondary network device and the terminal device is usually shorter than the distance between the primary network device and the terminal device. Therefore, the actual path loss between the secondary network device and the terminal device may be smaller than the path loss between the primary network device and the terminal device. In this case, the first path loss compensation factor is usually less than or equal to the second path loss compensation factor. In other words, the offset value of the path loss compensation factor is less than or equal to 0.

Optionally, the offset value of the path loss compensation factor is less than or equal to 0.

It should be noted that, based on the foregoing formula, when the offset value of the path loss compensation factor is less than or equal to 0, the offset value of the path loss compensation factor is preceded by "+".

In some embodiments, the second path loss compensation factor may be represented by using the following formula:
Second path loss compensation factor=First path loss compensation factor α+Offset value Δα of a path loss compensation factor.

Optionally, the offset value of the path loss compensation factor is greater than or equal to 0.

It should be noted that, based on the foregoing formula, when the offset value of the path loss compensation factor is greater than or equal to 0, the offset value of the path loss compensation factor is preceded by "-".

Optionally, the transmit power of the uplink signal directed to the secondary network device is determined based on the second path loss and the second path loss compensation factor.

In some embodiments, a product of the second path loss and the second path loss compensation factor is used as a component in determining the transmit power of the uplink signal directed to the secondary network device.

When the power control offset parameter value includes the offset value of the path loss of the uplink signal and the offset value of the path loss compensation factor, in some embodiments, one of determining, based on the second path loss and the second path loss compensation factor, the transmit power of the uplink signal directed to the secondary network device may be represented by using the following formula: $\left(α+Δα\right) ⋅ \left(PL+ΔPL\right)$ (α + Δα) represents the second path loss compensation factor, and (PL + ΔPL) represents the second path loss.

Optionally, the offset value of the path loss compensation factor is less than or equal to 0, and the offset value of the path loss is less than or equal to 0.

In some embodiments, one of determining, based on the second path loss and the second path loss compensation factor, the transmit power of the uplink signal directed to the secondary network device may be represented by using the following formula: $\left(α-Δα\right) ⋅ \left(PL-ΔPL\right)$

Optionally, the offset value of the path loss compensation factor is greater than or equal to 0, and the offset value of the path loss is greater than or equal to 0.

In some embodiments, one of determining, based on the second path loss and the second path loss compensation factor, the transmit power of the uplink signal directed to the secondary network device may be represented by using the following formula: $\left(α+Δα\right) ⋅ \left(PL-ΔPL\right)$

Optionally, the offset value of the path loss compensation factor is less than or equal to 0, and the offset value of the path loss is greater than or equal to 0.

In some embodiments, one of determining, based on the second path loss and the second path loss compensation factor, the transmit power of the uplink signal directed to the secondary network device may be represented by using the following formula: $\left(α-Δα\right) ⋅ \left(PL+ΔPL\right)$

Optionally, the offset value of the path loss compensation factor is greater than or equal to 0, and the offset value of the path loss is less than or equal to 0.

When the power control offset parameter value includes the offset value of the path loss of the uplink signal, in some embodiments, one of determining, based on the second path loss and the first path loss compensation factor, the transmit power of the uplink signal directed to the secondary network device may be represented by using the following formula: $α ⋅ \left(PL+ΔPL\right)$

α represents the first path loss compensation factor, and (PL + ΔPL) represents the second path loss.

Optionally, the offset value of the path loss is less than or equal to 0.

In some embodiments, one of determining, based on the second path loss and the first path loss compensation factor, the transmit power of the uplink signal directed to the secondary network device may be represented by using the following formula: $α ⋅ \left(PL-ΔPL\right)$

Optionally, the offset value of the path loss is greater than or equal to 0.

When the power control offset parameter value includes the offset value of the path loss compensation factor of the uplink signal, in some embodiments, one of determining, based on the first path loss and the second path loss compensation factor, the transmit power of the uplink signal directed to the secondary network device may be represented by using the following formula: $\left(α+Δα\right) PL$

Optionally, the offset value of the path loss compensation factor is less than or equal to 0.

In some embodiments, one of determining, based on the first path loss and the second path loss compensation factor, the transmit power of the uplink signal directed to the secondary network device may be represented by using the following formula: $\left(α-Δα\right) PL$

Optionally, the offset value of the path loss compensation factor is greater than or equal to 0.

It may be understood that, in the power control method provided in this embodiment of this application, the power control offset parameter value sent by the primary network device to the terminal device may be the offset value of the path loss, may be the offset value of the path loss compensation factor, or may be the offset value of the path loss and the offset value of the path loss compensation factor.

In this embodiment of this application, the power control offset parameter value that is sent by the primary network device and that indicates the uplink signal directed to the secondary network device is received, so that the path loss and the path loss compensation factor of transmission of the uplink signal between the terminal device and the secondary network device is determined based on the power control offset parameter value, and the transmit power of the uplink signal between the terminal device and the secondary network device is further determined based on the path loss and the path loss compensation factor, to determine the transmit power of the uplink signal directed to the secondary network device that does not support transmission of the downlink signal.

It should be noted that, in the architecture of the communication system shown in FIG. 2b, because the terminal device has mobility, the uplink signal transmitted by the terminal device may be changed from being directed to the primary network device to being directed to the secondary network device, or may be changed from being directed to the secondary network device to being directed to the primary network device. For example, in some cases, when the distance between the terminal device and the primary network device is less than the distance between the terminal device and the secondary network device, the terminal device may directly transmit the uplink signal to the primary network device.

It may be understood that transmit power of an uplink signal transmitted by the terminal device to the primary network device does not need to apply the power control offset parameter value. Therefore, in the power control method provided in this embodiment of this application, the primary network device further configures information indicating whether the terminal device enables or applies the power control offset parameter value, to determine, based on the power control offset parameter value, the transmit power of the uplink signal directed to the secondary network device.

With reference to FIG. 4 to FIG. 7, the following describes in detail a specific implementation in which the primary network device further configures the information indicating whether the terminal device enables or applies the power control offset parameter value, and determines, based on the power control offset parameter value when the primary network device further configures the information indicating whether the terminal device enables or applies the power control offset parameter value, the transmit power of the uplink signal directed to the secondary network device in the power control method provided in this embodiment of this application.

FIG. 4 is a schematic flowchart of a power control method according to another embodiment of this application. As shown in FIG. 4, the power control method includes the following steps.

S401: Receive first information from a primary network device, where the first information indicates one or more power control offset parameter values of an uplink signal directed to a secondary network device.

Correspondingly, the primary network device sends the first information.

For example, sending the first information may also be described as indicating the first information, or may be described as transmitting the first information.

For example, receiving the first information may also be described as obtaining the first information.

Optionally, that the primary network device sends the first information further includes generating the first information. Specifically, the network device generates the first information based on a behavior that is of a terminal device and that is detected by the network device.

For example, generating the first information may also be described as determining the first information.

Optionally, the first information is carried in RRC signaling.

Optionally, signaling carrying the first information is used to configure the one or more power control offset parameter values.

Optionally, the primary network device supports both transmission of a downlink signal and reception of an uplink signal, and the secondary network device supports reception of an uplink signal.

Specifically, the primary network device supports receiving the uplink signal from the terminal device and sending the downlink signal to the terminal device, and the secondary network device supports receiving the uplink signal from the terminal device, but does not support sending a downlink signal to the terminal device.

Optionally, the uplink signal of the terminal device may include a signal corresponding to an uplink channel and/or an uplink reference signal.

Optionally, the uplink channel includes at least one of the following: a PUSCH, a PUCCH, and a PRACH.

Optionally, the uplink reference signal includes at least one of the following: an uplink reference signal used for a non-codebook, an uplink reference signal used for a codebook, or an uplink reference signal used for beam management.

Optionally, the one or more power control offset parameter values include an offset value of one or more path losses of the uplink signal and/or an offset value of one or more path loss compensation factors of the uplink signal.

S402: Receive second information from the primary network device, where the second information indicates to apply the power offset parameter value.

Correspondingly, the primary network device sends the second information.

For example, sending the second information may also be described as indicating the second information, or may be described as transmitting the second information.

For example, receiving the second information may also be described as obtaining the second information.

Optionally, the second information is carried in downlink control information (downlink control information, DCI) signaling.

For example, that the second information indicates to apply the power offset parameter value may also be described as that the second information indicates to enable the power offset parameter value.

Optionally, before the transmit power of the uplink signal directed to the secondary network device is determined based on the power control offset parameter value, the second information is received from the primary network device.

Specifically, the second information indicates whether to enable or apply the power offset parameter value. In a possible implementation, a numerical agreement between the primary network device and the terminal device may be used. For example, a value 1 represents that the second information indicates to enable or apply the power offset parameter value, and a value 0 represents that the second information indicates not to enable or apply the power offset parameter value. Correspondingly, the value 0 may alternatively represent that the second information indicates to enable or apply the power offset parameter value, and the value 1 may alternatively represent that the second information indicates not to enable or apply the power offset parameter value, or the like.

Optionally, when the first information indicates a plurality of power control offset parameter values, the second information further indicates any one of the plurality of power control offset parameter values.

In some embodiments, when the first information indicates one power control offset parameter value, the second information further indicates to apply the power control offset parameter value. In some embodiments, when the first information indicates at least two power control offset parameter values, the second information indicates to apply the power control offset parameter values, and further indicates any one of a plurality of power control offset parameter values. In other words, the second information indicates to apply any one of the plurality of power control offset parameter values.

In a possible implementation, the plurality of power control offset parameter values are numbered, and one of the plurality of power control offset parameter values is determined based on a sequence number indicated by the second information.

Optionally, the first information and the second information may be carried in a same piece of signaling, or may be carried in different pieces of signaling. This is not limited in this embodiment of this application, and is specifically determined according to an actual application requirement.

For example, the signaling may be RRC signaling, or may be DCI signaling.

In some embodiments, the first information and the second information may be carried in a same piece of RRC signaling or DCI signaling.

In some embodiments, the first information is carried in the RRC signaling, and the second information is carried in the DCI signaling.

In some embodiments, the first information is carried in the DCI signaling, and the second information is carried in the RRC signaling.

It should be noted that, when the second information indicates to apply the power control offset parameter value, in a possible case, the uplink signal of the terminal device is transmitted to the secondary network device, and in this case, the path loss is determined based on a second path loss, or the path loss compensation factor is determined based on a second path loss compensation factor.

The second path loss is determined based on a first path loss and the offset value of the path loss, and the second path loss compensation factor is determined based on the first path loss compensation factor and the offset value of the path loss compensation factor.

S403: In response to the second information, determine, based on the power control offset parameter value, the transmit power of the uplink signal directed to the secondary network device.

Specifically, when the second information indicates to enable or apply the power control offset parameter value, the transmit power of the uplink signal directed to the secondary network device is further determined based on one of the plurality of power control offset parameter values indicated by the second information.

Specifically, determining, based on the power control offset parameter value, the transmit power of the uplink signal directed to the secondary network device is similar to step S302. Details are not described herein again.

Optionally, when the second information indicates not to enable or apply the power control offset parameter value, in a possible case, the uplink signal of the terminal device is transmitted to the primary network device, and in this case, the path loss is determined based on the first path loss, or the path loss compensation factor is determined based on the first path loss compensation factor.

The first path loss is determined based on downlink reference signal transmit power and downlink reference signal received power.

In this embodiment of this application, when the first information indicating the plurality of power control offset parameter values is received, and the second information indicating to apply the power control offset parameter value is received, the transmit power of the uplink signal directed to the secondary network device is further determined based on one of the plurality of power control offset parameter values indicated by the second information, to determine the transmit power of the uplink signal directed to the secondary network device.

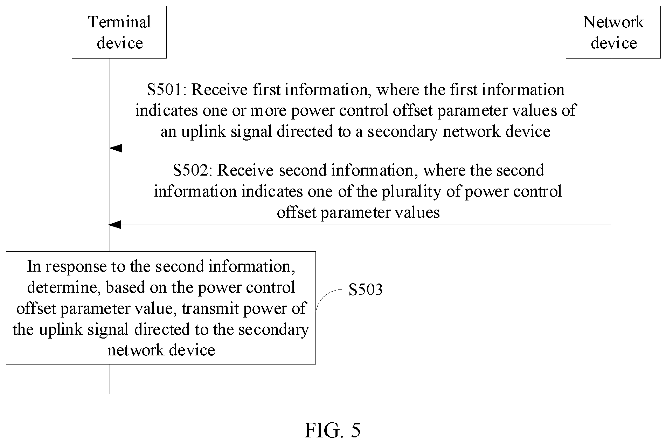

FIG. 5 is a schematic flowchart of a power control method according to another embodiment of this application. As shown in FIG. 5, the power control method includes the following steps.

S501: Receive first information from a primary network device, where the first information indicates one or more power control offset parameter values of an uplink signal directed to a secondary network device.

Correspondingly, the primary network device sends the first information.

For example, sending the first information may also be described as indicating the first information, or may be described as transmitting the first information.

For example, receiving the first information may also be described as obtaining the first information.

Optionally, that the primary network device sends the first information further includes generating the first information. Specifically, the network device generates the first information based on a behavior that is of a terminal device and that is detected by the network device.

For example, generating the first information may also be described as determining the first information.

Optionally, the first information is carried in RRC signaling.

Optionally, signaling carrying the first information is used to configure the one or more power control offset parameter values.

Optionally, the primary network device supports both transmission of a downlink signal and reception of an uplink signal, and the secondary network device supports reception of an uplink signal.

Specifically, the primary network device supports receiving the uplink signal from the terminal device and sending the downlink signal to the terminal device, and the secondary network device supports receiving the uplink signal from the terminal device, but does not support sending a downlink signal to the terminal device.

Optionally, the uplink signal of the terminal device may include a signal corresponding to an uplink channel and/or an uplink reference signal.

Optionally, the uplink channel includes at least one of the following: a PUSCH, a PUCCH, and a PRACH.

Optionally, the uplink reference signal includes at least one of the following: an uplink reference signal used for a non-codebook, an uplink reference signal used for a codebook, or an uplink reference signal used for beam management.

Optionally, the one or more power control offset parameter values include an offset value of one or more path losses of the uplink signal and/or an offset value of one or more path loss compensation factors of the uplink signal.

S502: Receive second information from the primary network device, where the second information indicates one of the plurality of power control offset parameter values.

Correspondingly, the primary network device sends the second information.

For example, sending the second information may also be described as indicating the second information, or may be described as transmitting the second information.

Optionally, the second information is carried in media access control control element (media access control control element, MAC CE) signaling.

For example, receiving the second information may also be described as obtaining the second information.

Optionally, before the transmit power of the uplink signal directed to the secondary network device is determined based on the power control offset parameter value, the second information is received from the primary network device.

In a possible implementation, the plurality of power control offset parameter values are numbered, and one of the plurality of power control offset parameter values is determined based on a sequence number indicated by the second information.

In some embodiments, when there is one power control offset parameter value indicated by the first information, the second information may further indicate to apply the power control offset parameter value.

Optionally, the first information and the second information may be carried in a same piece of signaling, or may be carried in different pieces of signaling. This is not limited in this embodiment of this application, and is specifically determined according to an actual application requirement.

For example, the signaling may be RRC signaling, or may be MAC CE signaling.

In some embodiments, the first information and the second information may be carried in a same piece of RRC signaling or MAC CE signaling.

In some embodiments, the first information is carried in the RRC signaling, and the second information is carried in the MAC CE signaling.

In some embodiments, the first information is carried in the MAC CE signaling, and the second information is carried in the RRC signaling.

S503: In response to the second information, determine, based on the power control offset parameter value, the transmit power of the uplink signal directed to the secondary network device.

Specifically, the transmit power of the uplink signal directed to the secondary network device is determined based on one of the plurality of power control offset parameter values indicated by the second information.

Specifically, determining, based on the power control offset parameter value, the transmit power of the uplink signal directed to the secondary network device is similar to step S302. Details are not described herein again.

In this embodiment of this application, after the first information indicating the plurality of power control offset parameter values is received, the transmit power of the uplink signal directed to the secondary network device is further determined based on one of the plurality of power control offset parameter values indicated by the received second information, to determine the transmit power of the uplink signal directed to the secondary network device.

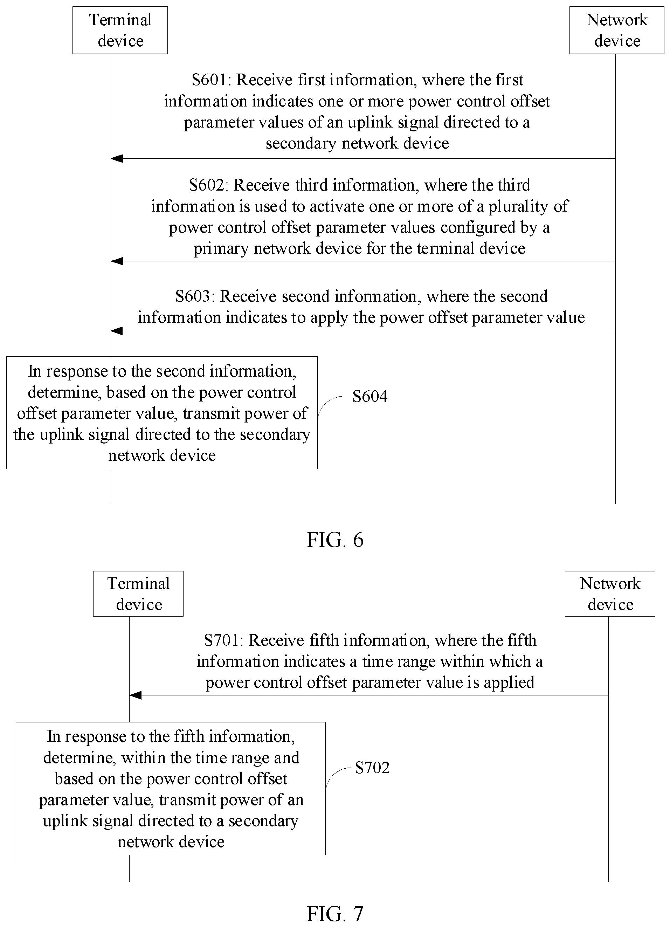

FIG. 6 is a schematic flowchart of a power control method according to another embodiment of this application. As shown in FIG. 6, the power control method includes the following steps. S601: Receive first information from a primary network device, where the first information indicates one or more power control offset parameter values of an uplink signal directed to a secondary network device.

Correspondingly, the primary network device sends the first information.

For example, sending the first information may also be described as indicating the first information, or may be described as transmitting the first information.

For example, receiving the first information may also be described as obtaining the first information.

Optionally, that the primary network device sends the first information further includes generating the first information. Specifically, the network device generates the first information based on a behavior that is of a terminal device and that is detected by the network device.

For example, generating the first information may also be described as determining the first information.

Optionally, the first information is carried in RRC signaling.

Optionally, signaling carrying the first information is used to configure the one or more power control offset parameter values.

Optionally, the primary network device supports both transmission of a downlink signal and reception of an uplink signal, and the secondary network device supports reception of an uplink signal.

Specifically, the primary network device supports receiving the uplink signal from the terminal device and sending the downlink signal to the terminal device, and the secondary network device supports receiving the uplink signal from the terminal device, but does not support sending a downlink signal to the terminal device.

Optionally, the uplink signal of the terminal device may include a signal corresponding to an uplink channel and/or an uplink reference signal.

Optionally, the uplink channel includes at least one of the following: a PUSCH, a PUCCH, and a PRACH.

Optionally, the uplink reference signal includes at least one of the following: an uplink reference signal used for a non-codebook, an uplink reference signal used for a codebook, or an uplink reference signal used for beam management.

Optionally, the one or more power control offset parameter values include an offset value of one or more path losses of the uplink signal and/or an offset value of one or more path loss compensation factors of the uplink signal.

S602: Receive third information from the primary network device, where the third information is used to activate one or more of a plurality of power control offset parameter values configured by the primary network device for the terminal device.

Correspondingly, the primary network device sends the third information.

For example, sending the third information may also be described as indicating the third information, or may be described as transmitting the third information.

For example, receiving the third information may also be described as obtaining the third information.

Optionally, the third information is carried in MAC CE signaling.

Optionally, the third information is used to activate the power control offset parameter value that is configured by the primary network device for the terminal device and that is of the uplink signal directed to the secondary network device.

The secondary network device supports reception of an uplink signal, but does not support transmission of a downlink signal.

It may be understood that the one or more of the plurality of configured power control offset parameter values are the one or more power control offset parameter values indicated by the first information in step S601.

Optionally, activating the one or more power control offset parameter values includes activating the offset value of the one or more path losses of the uplink signal and/or activating the offset value of the one or more path loss compensation factors of the uplink signal.

In some embodiments, activating the one or more power control offset parameter values includes activating the offset value of the one or more path losses of the uplink signal. In some embodiments, activating the one or more power control offset parameter values includes activating the offset value of the one or more path loss compensation factors of the uplink signal. In some embodiments, activating the one or more power control offset parameter values includes activating the offset value of the one or more path losses of the uplink signal and activating the offset value of the one or more path loss compensation factors of the uplink signal.

It may be understood that the one or more activated power control offset parameter values may also be deactivated based on deactivation information indicated by the MAC CE signaling, to deactivate corresponding one or more activated power control offset parameter values.

Optionally, fourth information is received from the primary network device, where the fourth information indicates to deactivate one or more of the plurality of power control offset parameter values configured by the primary network device for the terminal device.

Correspondingly, the primary network device sends the fourth information.

Optionally, the fourth information is carried in the MAC CE signaling.

In a possible implementation, after receiving the fourth information, when determining transmit power of an uplink signal channel or a reference signal, the terminal device does not apply the power control offset parameter value indicated by the fourth information.

S603: Receive second information from the primary network device, where the second information indicates to apply the power offset parameter value.

Correspondingly, the primary network device sends the second information.

For example, sending the second information may also be described as indicating the second information, or may be described as transmitting the second information.

For example, receiving the second information may also be described as obtaining the second information.

Optionally, the second information is carried in downlink control information (downlink control information, DCI) signaling.

For example, that the second information indicates to apply the power offset parameter value may also be described as that the second information indicates to enable the power offset parameter value.

Optionally, before the transmit power of the uplink signal directed to the secondary network device is determined based on the power control offset parameter value, the second information is received from the primary network device.

Optionally, when the third information indicates to activate the one or more configured power control offset parameter values, the second information indicates to apply one of the one or more activated power control offset parameter values.

Optionally, when the third information indicates to activate the one or more configured power control offset parameter values, the second information further indicates any one of the one or more activated power control offset parameter values.

Specifically, when the transmit power of the uplink signal directed to the secondary network device is determined, the power control offset parameter value is applied.

It should be noted that, when the second information indicates to apply the power control offset parameter value, in a possible case, the uplink signal of the terminal device is transmitted to the secondary network device, and in this case, the path loss is determined based on a second path loss, or the path loss compensation factor is determined based on a second path loss compensation factor.

The second path loss is determined based on a first path loss and the offset value of the path loss, and the second path loss compensation factor is determined based on the first path loss compensation factor and the offset value of the path loss compensation factor.

S604: In response to the second information, determine, based on the power control offset parameter value, the transmit power of the uplink signal directed to the secondary network device.

Specifically, when the second information indicates to enable or apply the one or more of the plurality of configured power control offset parameter values that are activated based on the third information, the transmit power of the uplink signal directed to the secondary network device is further determined based on one of the one or more power control offset parameter values indicated by the second information.

Specifically, determining, based on the power control offset parameter value, the transmit power of the uplink signal directed to the secondary network device is similar to step S302. Details are not described herein again.

Optionally, when the second information indicates not to enable or apply the power control offset parameter value, in a possible case, the uplink signal of the terminal device is transmitted to the primary network device, and in this case, the path loss is determined based on the first path loss, or the path loss compensation factor is determined based on the first path loss compensation factor.

The first path loss is determined based on downlink reference signal transmit power and downlink reference signal received power.

In this embodiment of this application, when the first information indicating the plurality of power control offset parameter values, the third information indicating to activate the one or more configured power control offset parameter values, and the second information indicating to apply the one or more power control offset parameter values and further indicating one of the plurality of power control offset parameter values are sequentially received, the transmit power of the uplink signal directed to the secondary network device is determined by applying the power control offset parameter value, to determining the transmit power of the uplink signal directed to the secondary network device.

FIG. 7 is a schematic flowchart of a power control method according to another embodiment of this application. As shown in FIG. 7, the power control method includes the following steps.

S701: Receive fifth information from a network device, where the fifth information indicates a time range within which a power control offset parameter value is applied.

Correspondingly, a primary network device sends the fifth information.

For example, sending the fifth information may also be described as indicating the fifth information, or may be described as transmitting the fifth information.

For example, receiving the fifth information may also be described as obtaining the fifth information.

Optionally, the fifth information is carried in RRC signaling.

For example, indicating the time range within which the power control offset parameter value is applied may also be described as indicating a time range within which the power control offset parameter value takes effect.

It may be understood that the power control offset parameter value takes effect or is applied only within the time range.

It should be noted that, within the time range within which the power control offset parameter value is applied, an uplink signal of a terminal device may be an uplink signal directed to a secondary network device.

In some embodiments, the fifth information may further indicate a time range within which the power control offset parameter value does not take effect or is not applied. In other words, the power control offset parameter value is not applied within the time range, or the power control offset parameter value does not take effect within the time range.

It should be noted that, within the time range within which the power control offset parameter value is not applied, the uplink signal of the terminal device may be an uplink signal directed to the primary network device.

S702: In response to the fifth information, determine, within the time range and based on the power control offset parameter value, transmit power of the uplink signal directed to the secondary network device.

Determining, based on the power control offset parameter value, the transmit power of the uplink signal directed to the secondary network device is similar to step S302. Details are not described herein again.

Optionally, the primary network device configures a timer, and the timer is set with an upper threshold.

Optionally, when the power control offset parameter value and/or the time range configured by the primary network device are received, the timer starts timing.

In some embodiments, before the timer reaches the upper threshold, the terminal device applies the power control offset parameter value. After the timer reaches the upper threshold, the terminal device no longer applies the power offset parameter value.

It should be noted that, in this embodiment of this application, the primary network device may predict a motion track of the terminal device. Therefore, the primary network device can configure the time range, before the timer reaches the upper threshold, the terminal device transmits an uplink signal to the secondary network device, and after the timer reaches the upper threshold, the terminal device transmits an uplink signal to the primary network device.

Correspondingly, when the fifth information indicates the time range within which the power control offset parameter value is not applied, in some embodiments, before the timer reaches the upper threshold, the terminal device does not apply the power control offset parameter value, and after the timer reaches the upper threshold, the terminal device applies the power offset parameter value. In other words, the primary network device can configure the time range, before the timer reaches the upper threshold, the terminal device transmits an uplink signal to the primary network device, and after the timer reaches an upper threshold, the terminal device transmits an uplink signal to the secondary network device.

In this embodiment of this application, the fifth information indicating the time range within which the power control offset parameter value is applied is obtained, so that the transmit power of the uplink signal directed to the secondary network device is further determined based on the power control offset parameter value within the indicated time range, to determine the transmit power of the uplink signal directed to the secondary network device.

It should be noted that, in the power control method provided in this embodiment of this application, to enhance an uplink signal rate, in the diagram of the architecture of the communication system shown in FIG. 2a, the terminal device may simultaneously transmit uplink signals to the primary network device and the secondary network device. In this case, the primary network device needs to simultaneously indicate two sets of power configuration parameters to the terminal device for uplink signal transmission.

Specifically, the network device may simultaneously indicate two sets of power configuration parameters for uplink signal channel or uplink reference signal transmission, and one set of power configuration parameters is configured with the power control offset parameter value. Further, the primary network device indicates, to the terminal device, a transmission status indication associated with the power control offset parameter value, to further apply the power control offset parameter value of the transmission status indication to determine the transmit power of the uplink signal directed to the secondary network device.

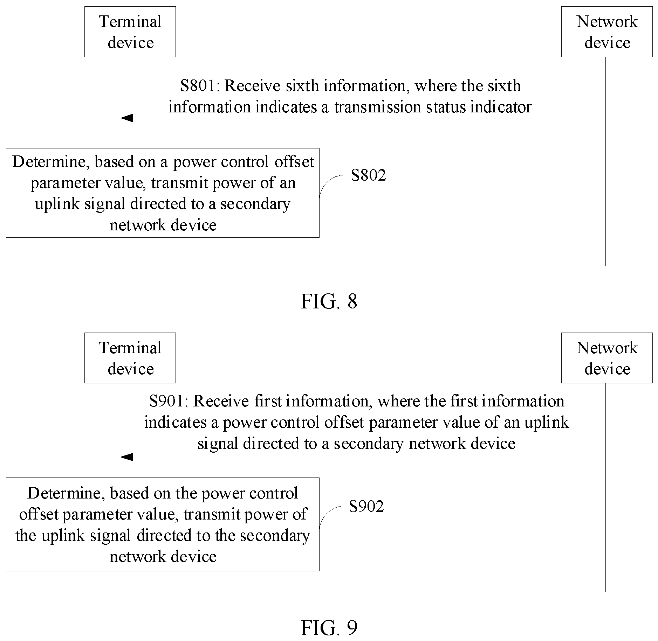

With reference to FIG. 8, the following describes in detail a power control method that is applicable to the foregoing scenario and that is provided in an embodiment of this application.

FIG. 8 is a schematic flowchart of a power control method according to another embodiment of this application. As shown in FIG. 8, the power control method includes the following steps.

S801: Receive sixth information from a primary network device, where the sixth information indicates a transmission status indicator.

Correspondingly, the primary network device sends the sixth information.

For example, sending the sixth information may also be described as indicating the sixth information, or may be described as transmitting the sixth information.

For example, receiving the sixth information may also be described as obtaining the sixth information.

For example, the transmission status indicator may be represented as a transmission configuration indicator, namely, a transmission status indicator (transmission configuration indicator, TCI).

It may be understood that the transmission status indicator is an indication of status information of transmission of an uplink signal or a downlink signal. The transmission status indicator in this embodiment of this application is an indication of uplink signal status information, and specifically, may be an indication of a state of an uplink signal directed to the primary network device and/or an indication of a state of an uplink signal directed to a secondary network device.

Optionally, the transmission status indicator is used to associate a power control offset parameter value.

For example, one transmission status indicator may be associated with at least one set of power configuration parameters.

Optionally, the primary network device supports both transmission of a downlink signal and reception of an uplink signal.

Specifically, the primary network device supports receiving an uplink signal from a terminal device and sending a downlink signal to the terminal device.

Optionally, the sixth information is carried in related signaling used to configure a configured-grant PUSCH, and/or the sixth information is carried in DCI signaling used to schedule uplink transmission.

Optionally, the transmission status indicator includes a first transmission status indicator and/or a second transmission status indicator.

Optionally, the first transmission status indicator corresponds to one uplink signal, and/or the second transmission status indicator corresponds to one uplink signal. The uplink signal may be an uplink signal directed to the primary network device, or may be an uplink signal directed to the secondary network device.

In some embodiments, the first transmission status indicator corresponds to one uplink signal. In some embodiments, the second transmission status indicator corresponds to one uplink signal. In some embodiments, the first transmission status indicator corresponds to one uplink signal, and the second transmission status indicator corresponds to one uplink signal.

For example, the first transmission status indicator may correspond to the uplink signal directed to the primary network device, and the second transmission status indicator may correspond to the uplink signal directed to the secondary network device. Correspondingly, alternatively, the first transmission status indicator may correspond to the uplink signal directed to the secondary network device, and the second transmission status indicator may correspond to the uplink signal directed to the primary network device.

Optionally, the first transmission status indicator is associated with the power control offset parameter value, and/or the second transmission status indicator is associated with the power control offset parameter value.

In some embodiments, the first transmission status indicator is associated with the power control offset parameter value. In some embodiments, the second transmission status indicator is associated with the power control offset parameter value. In some embodiments, the first transmission status indicator is associated with the power control offset parameter value, and the second transmission status indicator is associated with the power control offset parameter value. S802: Determine, based on the power control offset parameter value, transmit power of the uplink signal directed to the secondary network device.

Optionally, when the first transmission status indicator is associated with the power control offset parameter value, the first transmission status indicator is used to determine the uplink signal directed to the secondary network device. Further, when the transmit power of the uplink signal directed to the secondary network device is determined, the power control offset parameter value is applied. In other words, the transmit power of the uplink signal directed to the secondary network device is determined based on the power control offset parameter value.

Correspondingly, when the second transmission status indicator is associated with the power control offset parameter value, the second transmission status indicator is used to determine the uplink signal directed to the secondary network device. Further, when the transmit power of the uplink signal directed to the secondary network device is determined, the power control offset parameter value is applied. In other words, the transmit power of the uplink signal directed to the secondary network device is determined based on the power control offset parameter value.

It should be noted that signals transmitted by the terminal device to the primary network device and the secondary network device may be scheduled based on different pieces of DCI. DCI from different network devices is each associated with one piece of index information.

Optionally, the transmission status indicator is associated with a first preset index value.

Specifically, the first transmission status indicator is associated with the first preset index value, or a second transmission status indicator is associated with the first preset index value.

Optionally, the power control offset parameter value is associated with a second preset index value.

A specific implementation of determining, by the terminal device based on the power control offset parameter value associated with the transmission status indicator, the transmit power of the uplink signal directed to the secondary network device is as follows.

In an implementation, the first transmission status indicator is associated with the power control offset parameter value, the first transmission status indicator is associated with the first preset index value, and the power control offset parameter value is associated with the second preset index value. When the first preset index value is the same as the second preset index value, the terminal device applies the power control offset parameter value when determining transmit power of an uplink channel, such as a PUSCH or a PUCCH, scheduled by the DCI, or an uplink reference signal.

Correspondingly, the second transmission status indicator is associated with the power control offset parameter value, the second transmission status indicator is associated with the first preset index value, and the power control offset parameter value is associated with the second preset index value. When the first preset index value is the same as the second preset index value, the terminal device applies the power control offset parameter value when determining the transmit power of the uplink channel, such as the PUSCH or the PUCCH, scheduled by the DCI, or the uplink reference signal.

In another implementation, the first transmission status indicator is associated with the first preset index value. When the first preset index value is the same as a preset index value, the terminal device applies the power control offset parameter when determining the transmit power of the uplink channel, such as the PUSCH or the PUCCH, scheduled by the DCI, or the uplink reference signal.

Correspondingly, the second transmission status indicator is associated with the first preset index value. When the first preset index value is the same as the preset index value, the terminal device applies the power control offset parameter when determining the transmit power of the uplink channel, such as the PUSCH or the PUCCH, scheduled by the DCI, or the uplink reference signal.

For example, the first preset index value, the second preset index value, and the preset index value may be 1 or 0.

A specific implementation of applying, by the terminal device, the power control offset parameter when determining the transmit power of the uplink channel, such as the PUSCH or the PUCCH, scheduled by the DCI, or the uplink reference signal is similar to step S302. Details are not described herein again.

In this embodiment of this application, the sixth information indicating the transmission status indicator is obtained, so that the transmit power of the uplink signal is further determined based on the power control offset parameter value associated with the transmission status indicator, to determine the transmit power of the uplink signal directed to the secondary network device.

It should be noted that the power control method provided in an embodiment of this application is further applicable to a scenario in which no RRC connection is established between the terminal device and the network device, which is described in detail below with reference to a specific embodiment.

FIG. 9 is a schematic flowchart of a power control method according to another embodiment of this application. As shown in FIG. 9, the power control method includes the following steps.

S901: Receive first information from a primary network device, where the first information indicates a power control offset parameter value of an uplink signal directed to a secondary network device.

Correspondingly, the primary network device sends the first information.

For example, sending the first information may also be described as indicating the first information, or may be described as transmitting the first information.

For example, receiving the first information may also be described as obtaining the first information.

Optionally, that the primary network device sends the first information further includes generating the first information. Specifically, the network device generates the first information based on a behavior that is of a terminal device and that is detected by the network device.

For example, generating the first information may also be described as determining the first information.

Optionally, the first information is carried in a system information block (System Information Block, SIB).

It may be understood that, when the terminal device does not enter a connected state, the power control offset parameter value cannot be sent to the terminal device through dedicated signaling such as RRC signaling. In this case, the network device may send the power control offset parameter value to the terminal device in a broadcast manner.

Specifically, a power control offset parameter value carried in system information may be used to determine power of at least one of the following signals: a physical random access channel (physical random access channel, PRACH) or a PUSCH, for example, Msg3 or MsgA, transmitted in a random access process.

Optionally, the primary network device supports both transmission of a downlink signal and reception of an uplink signal, and the secondary network device supports reception of an uplink signal.

Specifically, the primary network device supports receiving the uplink signal from the terminal device and sending the downlink signal to the terminal device, and the secondary network device supports receiving the uplink signal from the terminal device, but does not support sending a downlink signal to the terminal device.

Optionally, the uplink signal of the terminal device may include a signal corresponding to an uplink channel and/or an uplink reference signal.

Optionally, the uplink channel includes at least one of the following: a PUSCH, a PUCCH, and a PRACH.

Optionally, the uplink reference signal includes at least one of the following: an uplink reference signal used for a non-codebook, an uplink reference signal used for a codebook, or an uplink reference signal used for beam management.

Optionally, the power control offset parameter value includes an offset value of a path loss of the uplink signal and/or an offset value of a path loss compensation factor of the uplink signal.

S902: Determine, based on the power control offset parameter value, transmit power of the uplink signal directed to the secondary network device.

A specific implementation is similar to step S302. Details are not described herein again.

In this embodiment of this application, the SIB carries the power control offset parameter value used for the uplink signal, and the transmit power of the uplink signal directed to the secondary network device is further determined based on the power control offset parameter value, so that the transmit power of the uplink signal directed to the secondary network device is determined when no RRC connection is established between the terminal device and the network device.

It should be noted that, in control of the transmit power of the uplink signal, the uplink signal may usually be associated with a closed-loop index used to determine an application scope of a power control command. In a manner, the power control command may be associated with a closed-loop index to determine adjustment of the transmit power of the uplink signal. The closed-loop index associated with the uplink signal is the same as the closed-loop index associated with the power control command.

The power control method provided in this embodiment of this application is applicable to the foregoing scenario in which a power control command is associated with a closed-loop index to determine adjustment of transmit power of an uplink signal. With reference to a specific embodiment, the following describes in detail a power control method provided in an embodiment of this application.

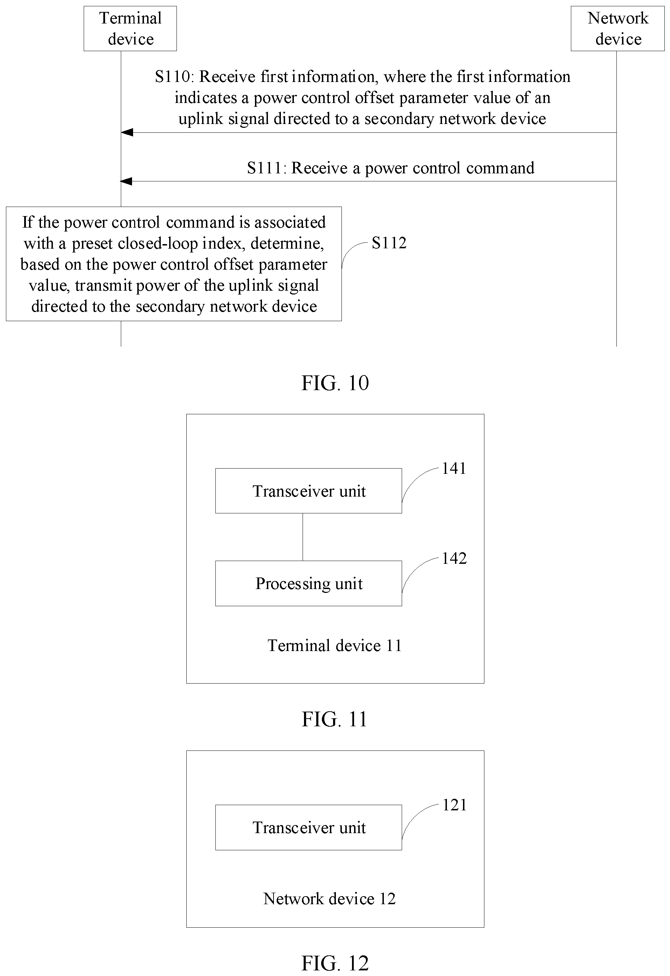

FIG. 10 is a schematic flowchart of a power control method according to another embodiment of this application. As shown in FIG. 10, the power control method includes the following steps.

S110: Receive first information from a primary network device, where the first information indicates a power control offset parameter value of an uplink signal directed to a secondary network device.

Correspondingly, the primary network device sends the first information.

For example, sending the first information may also be described as indicating the first information, or may be described as transmitting the first information.

Optionally, that the primary network device sends the first information further includes generating the first information. Specifically, the network device generates the first information based on a behavior that is of a terminal device and that is detected by the network device.

For example, generating the first information may also be described as determining the first information.

For example, receiving the first information may also be described as obtaining the first information.

Optionally, the power control offset parameter value is associated with a preset closed-loop index.

For example, the preset closed-loop index may be 1 or 0.

It may be understood that the preset closed-loop index is specifically used for control of transmit power of the uplink signal transmitted to the secondary network device.

Optionally, the primary network device supports both transmission of a downlink signal and reception of an uplink signal, and the secondary network device supports reception of an uplink signal.

Specifically, the primary network device supports receiving the uplink signal from the terminal device and sending the downlink signal to the terminal device, and the secondary network device supports receiving the uplink signal from the terminal device, but does not support sending a downlink signal to the terminal device.

Optionally, the uplink signal of the terminal device may include a signal corresponding to an uplink channel and/or an uplink reference signal.

Optionally, the uplink channel includes at least one of the following: a PUSCH, a PUCCH, and a PRACH.

Optionally, the uplink reference signal includes at least one of the following: an uplink reference signal used for a non-codebook, an uplink reference signal used for a codebook, or an uplink reference signal used for beam management.

Optionally, the power control offset parameter value includes an offset value of a path loss of the uplink signal and/or an offset value of a path loss compensation factor of the uplink signal.

S111: Receive a power control command from the primary network device.

Correspondingly, the primary network device sends the power control command.

For example, sending the power control command may also be described as transmitting the power control command, or may be described as indicating the power control command.

For example, receiving the power control command may also be described as obtaining the power control command.

Optionally, the power control command is used to determine adjustment of the transmit power of the uplink signal.

Optionally, the terminal device may obtain a plurality of power control commands.

S112: If the power control command is associated with the preset closed-loop index, determine, based on the power control offset parameter value, the transmit power of the uplink signal directed to the secondary network device.

It may be understood that, when the power control command is associated with the preset closed-loop index, and the power control offset parameter value is associated with the preset closed-loop index, that is, the closed-loop index associated with the power control command is consistent with the closed-loop index associated with the power control offset parameter value, the transmit power of the uplink signal directed to the secondary network device is determined based on the power control offset parameter value.

Specifically, a specific implementation of determining, based on the power control offset parameter value, the transmit power of the uplink signal directed to the secondary network device is similar to step S302. Details are not described herein again.

Optionally, the power control offset parameter value is associated with accumulated power control.

It should be noted that, when the terminal device obtains the power control offset parameter value reconfigured by the primary network device, the accumulated power control associated with the power control offset parameter needs to be reset. In other words, an accumulated power control part needs to be re-accumulated from zero.

It should be noted that reconfiguration of the power control offset parameter may be caused by movement of the terminal device, which makes the original accumulated power control part no longer effective, causing the original accumulated power control part associated with the power control offset parameter value to be cleared to 0.

In a possible implementation, the primary network device sends the reconfigured power control offset parameter value, and correspondingly, the terminal device obtains the reconfigured power control offset parameter value. Further, the terminal device determines, based on the reconfigured power control offset parameter value, the transmit power of the uplink signal directed to the secondary network device, and resets an accumulated power adjustment amount associated with the power control offset parameter value.

In this embodiment of this application, the power control command and the first information that indicates the power control offset parameter value for the secondary network device are obtained, and when the closed-loop index associated with the power control command is consistent with the closed-loop index associated with the power control offset parameter value, the transmit power of the uplink signal directed to the secondary network device is determined based on the power control offset parameter value, to determine the transmit power of the uplink signal directed to the secondary network device.

The communication method in embodiments of this application is described above. The following describes an apparatus for performing the method provided in embodiments of this application. It may be understood by a person skilled in the art that the method and the apparatus may be combined and mutual reference may be made. The related apparatus provided in this embodiment of this application may perform the steps in the foregoing list sorting method.

FIG. 11 is a diagram of a terminal device according to an embodiment of this application. As shown in FIG. 11, the terminal device 11 includes a transceiver unit 141 and a processing unit 142.

The terminal device provided in this embodiment is configured to implement the technical solutions of the terminal device in the foregoing method embodiments, and implementation principles and technical effects thereof are similar. Details are not described herein again.

FIG. 12 is a diagram of a structure of a network device according to an embodiment of this application. As shown in FIG. 12, the network device 12 includes a transceiver unit 121.

The network device provided in this embodiment may be a core network device or access network device, and is configured to implement the technical solutions in the foregoing method embodiments, and implementation principles and technical effects thereof are similar. Details are not described herein again.

It should be noted that all module names involved in embodiments of this application may be defined as other names, provided that functions of the modules can be implemented. The module names are not specifically limited.

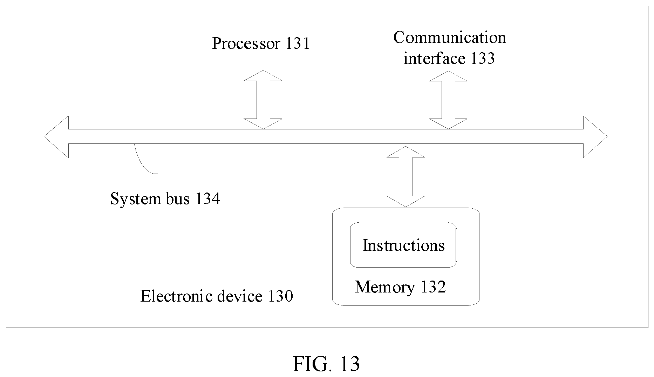

FIG. 13 is a diagram of a structure of an electronic device according to an embodiment of this application. As shown in FIG. 13, the electronic device 130 includes at least one processor 131, a memory 132, a communication interface 133, and a system bus 134. The memory 132 and the communication interface 133 are connected to the processor 131 through the system bus 134 and communicate with each other. The memory 132 is configured to store instructions. The communication interface 133 is configured to communicate with another device. The processor 131 is configured to invoke the instructions in the memory to perform the method steps provided in the foregoing method embodiments. Specific implementations and technical effects are similar. Details are not described herein again.

The system bus 134 mentioned in FIG. 13 may be a peripheral component interconnect (peripheral component interconnect, PCI) bus, an extended industry standard architecture (extended industry standard architecture, EISA) bus, or the like. The system bus 134 may be classified into an address bus, a data bus, a control bus, and the like. For ease of representation, only one thick line is used in the figure to represent the bus, but this does not mean that there is only one bus or only one type of bus.

The communication interface 133 is configured to implement communication between a database access apparatus and another device (for example, a client, a read/write database, or a read-only database).

The memory 132 may include a random access memory (random access memory, RAM), or may further include a non-volatile memory (non-volatile memory), for example, at least one magnetic disk memory.

The processor 131 may be a general-purpose processor, including a central processing unit, a network processor (network processor, NP), or the like, or may be a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like.

An embodiment of this application further provides a computer-readable storage medium. The computer-readable storage medium stores a computer program. When executed by a processor, the computer program is used to implement the method steps in the foregoing method embodiments. All or a part of the methods described in the foregoing embodiments may be implemented by software, hardware, firmware, or any combination thereof. If the methods are implemented by the software, functions may be stored on the computer-readable medium as one or more instructions or code or transmitted on the computer-readable medium. The computer-readable medium may include a computer storage medium and a communication medium, and may further include any medium that can transfer a computer program from one place to another place. The storage medium may be any target medium accessible by a computer. In a possible implementation, the computer-readable medium may include a RAM, a ROM, a compact disc read-only memory (compact disc read-only memory, CD-ROM) or another optical disk memory, a magnetic disk memory or another magnetic storage device, or any other medium that is to carry or store required program code in a form of instruction or data structure, and is accessible by the computer. In addition, any connection is appropriately referred to as a computer-readable medium. For example, if a coaxial cable, an optical fiber cable, a twisted pair, a digital subscriber line (Digital Subscriber Line, DSL), or a wireless technology (such as infrared, radio, and microwave) is used to transmit software from a website, a server, or another remote source, the coaxial cable, the optical fiber cable, the twisted pair, the DSL, or the wireless technology such as infrared, radio, and microwave is included in a definition of the medium. A magnetic disk and an optical disc used in this specification include an optical disc, a laser disc, an optical disc, a digital versatile disc (Digital Versatile Disc, DVD), a floppy disk, and a Blue-ray disc. The magnetic disk usually magnetically reproduces data, and the optical disc optically reproduces data by using a laser. The foregoing combinations should also be included in the scope of the computer-readable medium.

An embodiment of this application further provides a computer program product. The computer program product includes a computer program. When the computer program is run, a computer is enabled to perform the method steps in the foregoing method embodiments.

An embodiment of this application further provides a chip system, including at least one processor and a communication interface. The communication interface is interconnected to the at least one processor through a line, and the at least one processor is configured to run a computer program or instructions, to perform the method steps in the foregoing method embodiments.

It should be noted that user information (including but not limited to user equipment information, user personal information, and the like) and data (including but not limited to data used for analysis, stored data, displayed data, and the like) in this application are all information and data that are authorized by a user or that are fully authorized by each party. In addition, collection, use, and processing of the related data need to comply with related laws, regulations, and standards of related countries and regions, and a corresponding operation entry is provided for the user to choose to authorize or reject.

Embodiments of this application are described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processing unit of another programmable device to generate a machine, so that the instructions executed by the computer or the processing unit of the another programmable data processing device generate an apparatus for implementing a specific function in one or more processes in the flowcharts and/or in one or more blocks in the block diagrams.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, improvement, or the like made according to the technical solutions of the present invention shall fall within the protection scope of the present invention.

## Claims

1. A power control method, performed by a terminal device, and comprising:
receiving first information from a primary network device, wherein the first information indicates a power control offset parameter value of an uplink signal directed to a secondary network device, the primary network device supports receiving an uplink signal from the terminal device and transmitting a downlink signal to the terminal device, and the secondary network device supports receiving an uplink signal from the terminal device; and
determining, based on the power control offset parameter value, transmit power of the uplink signal directed to the secondary network device.

2. The method according to claim 1, wherein the power control offset parameter value comprises an offset value of a path loss of the uplink signal directed to the secondary network device and/or an offset value of a path loss compensation factor of the uplink signal directed to the secondary network device.

3. The method according to claim 1, wherein determining, based on the power control offset parameter value, the transmit power of the uplink signal directed to the secondary network device comprises:
determining, based on an offset value of a path loss of the uplink signal directed to the secondary network device and a first path loss, a second path loss related to the transmit power of the uplink signal directed to the secondary network device, or determining, based on an offset value of a path loss compensation factor of the uplink signal directed to the secondary network device and a first path loss compensation factor, a second path loss compensation factor related to the transmit power of the uplink signal directed to the secondary network device; and
determining, based on the second path loss and/or the second path loss compensation factor, the transmit power of the uplink signal directed to the secondary network device, wherein
the first path loss is a path loss for the primary network device, and the first path loss compensation factor is a path loss compensation factor for the primary network device.

4. The method according to any one of claims 1 to 3, wherein before determining, based on the power control offset parameter value, the transmit power of the uplink signal directed to the secondary network device, the method further comprises:
receiving second information from the primary network device, wherein the second information indicates to apply the power control offset parameter value.

5. The method according to any one of claims 1 to 4, further comprising:
receiving third information from the primary network device, wherein the third information is used to activate one or more of a plurality of power control offset parameter values configured by the primary network device for the terminal device.

6. The method according to claim 5, further comprising:
receiving fourth information from the primary network device, wherein the fourth information indicates to deactivate one or more of the plurality of power control offset parameter values configured by the primary network device for the terminal device.

7. The method according to any one of claims 1 to 6, further comprising:
receiving fifth information from the primary network device, wherein the fifth information indicates a time range within which the power control offset parameter value is applied; and
in response to the fifth information, determining, within the time range and based on the power control offset parameter value, the transmit power of the uplink signal directed to the secondary network device.

8. The method according to claims 1 to 7, further comprising:
receiving sixth information from the primary network device, wherein the sixth information indicates a transmission status indicator, wherein
the transmission status indicator comprises a first transmission status indicator and/or a second transmission status indicator, and the first transmission status indicator is associated with the power control offset parameter value, and/or the second transmission status indicator is associated with the power control offset parameter value.

9. The method according to claim 8, wherein the first transmission status indicator and the second transmission status indicator each correspond to one uplink signal, and determining, based on the power control offset parameter value, the transmit power of the uplink signal directed to the secondary network device comprises:
determining, based on the power control offset parameter value, the transmit power of the uplink signal directed to the secondary network device, wherein the uplink signal is an uplink signal corresponding to a transmission status indicator associated with the power control offset parameter value.

10. The method according to claim 8, wherein the transmission status indicator is associated with a first preset index value, and determining, based on the power control offset parameter value, the transmit power of the uplink signal directed to the secondary network device comprises:
if a second preset index value associated with the power control offset parameter value is the same as the first preset index value, determining, based on the power control offset parameter value, the transmit power of the uplink signal directed to the secondary network device.

11. The method according to any one of claims 1 to 10, wherein the power control offset parameter value is associated with a preset closed-loop index, and determining, based on the power control offset parameter value, the transmit power of the uplink signal directed to the secondary network device comprises:
receiving a power control command; and
if the power control command is associated with the preset closed-loop index, determining, based on the power control offset parameter value, the transmit power of the uplink signal directed to the secondary network device.

12. A power control method, performed by a primary network device, and comprising:
generating first information, wherein the first information indicates a power control offset parameter value of an uplink signal directed to a secondary network device, and the power control offset parameter value is used to determine transmit power of the uplink signal directed to the secondary network device; and
sending the first information.

13. The method according to claim 12, wherein the power control offset parameter value comprises an offset value of a path loss of the uplink signal directed to the secondary network device and/or an offset value of a path loss compensation factor of the uplink signal directed to the secondary network device.

14. The method according to claim 12 or 13, further comprising:
sending second information, wherein the second information indicates to apply the power control offset parameter value.

15. The method according to any one of claims 12 to 14, further comprising:
sending third information, wherein the third information is used to activate one or more of a plurality of power control offset parameter values configured by the primary network device for a terminal device.

16. The method according to claim 15, further comprising:
sending fourth information, wherein the fourth information indicates to deactivate one or more of the plurality of power control offset parameter values configured by the primary network device for the terminal device.

17. The method according to any one of claims 12 to 16, further comprising:
sending fifth information, wherein the fifth information indicates a time range within which the power control offset parameter value is applied.

18. The method according to any one of claims 12 to 17, further comprising:
sending sixth information, wherein the sixth information indicates a transmission status indicator, wherein
the transmission status indicator comprises a first transmission status indicator and/or a second transmission status indicator, and the first transmission status indicator is associated with the power control offset parameter value, and/or the second transmission status indicator is associated with the power control offset parameter value.

19. The method according to claim 18, wherein the transmission status indicator is associated with a first preset index value, and the power control offset parameter value is associated with a second preset index value.

20. The method according to any one of claims 12 to 19, wherein the power control offset parameter value is associated with a preset closed-loop index, and the method further comprises:
sending a power control command, wherein the power control command is associated with the preset closed-loop index.

21. An electronic device, comprising a processor and a memory, wherein
the memory stores computer-executable instructions; and
the processor executes the computer-executable instructions stored in the memory, to perform the method according to any one of claims 1 to 11 or the method according to any one of claims 12 to 20.

22. A computer-readable storage medium, wherein the storage medium stores a computer program or instructions, and when the computer program or the instructions are executed by a computer, the method according to any one of claims 1 to 11 or the method according to any one of claims 12 to 20 is implemented.

23. A chip system, comprising at least one processor and a communication interface, wherein the communication interface is interconnected to the at least one processor through a line, and the at least one processor is configured to run a computer program or instructions, to perform the method according to any one of claims 1 to 11 or the method according to any one of claims 12 to 20.

24. A computer program product, wherein the computer program product comprises instructions, and when the instructions are run by a computer, the method according to any one of claims 1 to 11 or the method according to any one of claims 12 to 20 is implemented.
